# EUROPÄISCHE PATENTANMELDUNG

(11) **EP 1 560 466 A2**
(43) Veröffentlichungstag der Anmeldung: **03.08.2005**
(21) Anmeldenummer: 05002077.5
(22) Anmeldetag: 02.02.2005
(51) Int. Cl.: H05B 33/08, H05B 37/03

(54) **Vorrichtung zur Erfassung des Betriebszustandes einer Elektorlumineszenz-Leuchteinheit**

(30) Priorität: 02.02.2004 DE 202004001519 U
(71) Anmelder: GLASS, Hagen, 80798 München (DE)
(72) Erfinder: GLASS, Hagen, 80798 München (DE)
(74) Vertreter: Behrmann, Niels, Dipl.-Ing.

(57) **Zusammenfassung**

Die Erfindung betrifft eine Vorrichtung zur Erfassung des Betriebszustands einer mittels einer Treibereinheit angesteuerten Elektrolumineszenz-Leuchteinheit (10), wobei die durch ein pulsweitenmoduliertes Steuersignal (Q1, Q2) angesteuerte Treibereinheit eine erste Tiefpasseinheit (L1, C1) sowie eine mittels einer Induktivität (L2) realisierte zweite Tiefpasseinheit (L2, C4) aufweist, die unmittelbar mit mindestens einem flächigen Elektrolumineszenz-Leuchtmodul verbunden ist und/oder eine kapazitive Wirkung (C4) des Elektrolumineszenz-Leuchtmoduls zum Realisieren eines Tiefpasses ausnutzt, wobei der als Bauelement ausgebildeten Induktivität (L2) eine Spannungs-Detektoreinheit (16) zugeordnet ist, die zum Erfassen einer über der Induktivität abfallenden Spannung und zum Erzeugen eines Lastunterbrechungs-Steuersignals (UC5) als Reaktion auf einen detektierten Spannungsabfall über der Induktivität ausgebildet ist.

## Beschreibung

Die vorliegende Erfindung betrifft eine Vorrichtung zur Erfassung des Betriebszustands einer mittels einer Treibereinheit angesteuerten Elektrolumineszenz-Leuchteinheit nach dem Oberbegriff des Hauptanspruchs.

Derartige Vorrichtungen sind aus dem Stand der Technik allgemein bekannt und werden durch die steigende Popularität von Elektrolumineszenz(EL-)-Leuchteinheiten zunehmend häufig eingesetzt.

Dabei besteht ein gängiges, eine EL-Leuchteinheit einsetzendes System aus einer flächigen EL-Einheit, welche typischerweise als Modul erhältlich ist und für zahlreiche Anwendungsfälle günstige Eigenschaften aufweist, nämlich durch einen hohen Wirkungsgrad energiesparend ist, durch die flächige Form eine flache, gleichwohl homogene und blendfreie Leuchtfläche ermöglicht, ferner typischerweise eine lange Lebensdauer besitzt und, da mittels der Elektrolumineszenz Kaltlicht erzeugt wird, keine Probleme durch Erwärmung auftreten. Mithin reichen die aus dem Stand der Technik bekannten Einsatzbereiche von EL-Systemen von Hinweistafeln und (Hintergrund-) Beleuchtungsanwendungen im Industrie- und Privatbereich über KFZ- und Gebäudetechnik (etwa Schweller- oder Treppenstufenbeleuchtung) bis hin zur Werbung und zu therapeutischen Anwendungen, etwa vor dem Hintergrund des Erzeugens von Leuchttischen oder anderen Hintergrund- oder Durchleuchtungsflächen.

Im praktischen Einsatz wird dabei häufig das flächige EL-Leuchtmodul in einem geeigneten Gehäuse bzw. einem Montageort getrennt von der Vorschaltelektronik gehalten; diese ist mit dem EL-Leuchtmodul typischerweise über ein Kabel oder eine andere flexible Leitung verbunden.

Da eine EL-Leuchteinheit im Wechselstrom-Ersatzschaltbild prinzipiell sich als kapazitive Last darstellt und die Leuchtkristalle der EL-Leuchteinheit Licht in Abhängigkeit vom durch die Einheit fließenden Strom emittieren (wobei Intensität des Lichtes sowie Farbtemperatur spannungs- bzw. frequenzabhängig bezogen auf das Betriebssignal sind) erzeugt die Vorschaltelektronik ein Wechselspannungssignal zur Ansteuerung des EL-Moduls. Typische Spannungsbereiche für gängige flächige EL-Module liegen dabei zwischen etwa 50 und 200 VAC, gängige Betriebsfrequenzen zwischen etwa 100 und 3000 Hz. Hier liegt also mit dem von der Vorschaltelektronik eines EL-Moduls bereitgestellten Signal ein potentiell gefahrenträchtiges Signal vor, welches von der Spannung her oberhalb der Schutzkleinspannung (48 Volt) liegt, so dass Schutzmaßnahmen zur Sicherheit der Gerätebetreiber notwendig sind.

Dies ist insbesondere notwendig für den Fall, dass etwa bei der beschriebenen flexiblen (kabelgebundenen) Anbindung zwischen dem eigentlichen Leuchtmodul und der Vorschaltelektronik (oder anderen zwischengeschalteten Einheiten) Störungen, Abrisse od. dgl. Probleme im Kabel auftreten, mit dem Ergebnis, dass etwa als Ergebnis einer Unterbrechung dann Hochspannung führende Kabelenden gegen Berührung nur unzureichend geschützt sind. Insbesondere gängige elektronische Schutztechnologien (wie etwa die bekannte galvanische Trennung der EL-Spannung mittels eines Transformators oder Überspannungs-, -strom- bzw. Kurzschlussschaltungen in der Vorschaltelektronik) sind für diese Problemsituation nur bedingt geeignet.

Aufgabe der vorliegenden Erfindung ist es daher, eine Betriebszustandserfassung für eine mittels einer Treibereinheit (häufig auch als Wandler- bzw. Konvertereinheit verstanden) angesteuerte Elektrolumineszenz-Leuchteinheit zu schaffen, bei welcher insbesondere ein sicherheitskritisches Unterbrechen einer Verbindung zwischen der Treibereinheit und einem die eigentliche Leuchteinheit realisierenden EL-Leuchtmodul schnell und zuverlässig erfasst werden kann, so dass geeignete Schutzmaßnahmen, etwa das Abschalten der Versorgungsspannung, durchgeführt werden können. Zudem ist eine solche Vorrichtung mit geringem hardwaretechnischen Aufwand zu schaffen, so dass sich die Vorrichtung insbesondere auch für eine verbreitete Seriennutzung eignet.

Die Aufgabe wird durch die Vorrichtung mit den Merkmalen des Hauptanspruchs gelöst; vorteilhafte Weiterbildungen der Erfindung sind in den Unteransprüchen beschrieben.

In erfindungsgemäß vorteilhafter Weise macht sich die Erfindung den Umstand zunutze, dass bei pulsweitenmodulierten (PWM), typischerweise digital vorliegenden Steuersignalen, welche dann für die Ansteuerung des EL-Leuchtmoduls tiefpassgefiltert und so in die notwendige, einem Sinus angenäherte Form gebracht werden, stets eine hochfrequente, überlagerte Wechselspannungskomponente, sogenannte Ripple-Spannung verbleibt, welche sich insbesondere zum Zweck der Betriebszustandserfassung des EL-Leuchtmoduls und konkreter als Grundlage für eine Notabschaltung günstig und mit geringem Aufwand auswerten lässt. Dabei hat es sich in der schaltungstechnischen Realisierung der Erfindung als besonders vorteilhaft herausgestellt, diese zu detektierende Spannung über der Induktivität eines zweiten, zur Glättung bzw. verbesserten Signalformung des Steuersignals eingesetzten Induktivität abzugreifen, die dort mittels einer einfachen Detektor- und Auswerteschaltung erfasst und nachfolgenden Steueraufgaben zugeführt werden kann. Dabei ist diese Induktivität bevorzugt diskret und in Form eines Bauelements vorgesehen (und nicht etwa parasitär), so dass die gewünschten Betriebsparameter gezielt durch Dimensionierung einstellbar sind (insbesondere der Spannungsunterschied über der Induktivität durch den Normalbetrieb einerseits und Unterbrechung der Zuleitung zum EL-Leuchtmodul andererseits).

Weiterbildungsgemäß und gemäß einer bevorzugten Realisierung der Erfindung hat es sich als einfach und elegant, gleichwohl betriebssicher herausgestellt, das zu den beschriebenen Detektionszwecken über der Induktivität abgegriffene Spannungssignal einem Opto-Koppler (oder einer vergleichbaren Übertragungseinheit) zuzuleiten, an deren Ausgangsseite dann wiede rum in ansonsten bekannter Weise eine Auswertung und Steuerung, etwa mittels eines Mikroprozessors oder -controllers erfolgen kann.

Im Ergebnis ist somit dann die Realisierung eines überaus einfach aufgebauten, gleichwohl betriebssicheren EL-Systems möglich, welches gerade im Hinblick auf kritische Unterbrechungen einer flexiblen Zuleitung eines Betriebs-Hochspannungssignals zwischen der Treibereinheit und dem eigentlichen EL-Leuchtmodul gegen Berührungen od. dgl. gefahrenträchtige Benutzungsprobleme einfach abgesichert ist. Damit dürfte sich die vorliegende Erfindung prinzipiell für nahezu beliebige Anwendungszwecke der Elektrolumineszenz-Beleuchtung eignen, auch in kritischen Umgebungen, wobei insbesondere auch vorgesehen ist, bestehende (PWM-)Ansteuersysteme durch die vorliegend erfindungsgemäße Technologie einfach, mit geringem Aufwand und wirksam zu ergänzen.

Weitere Vorteile, Merkmale und Einzelheiten der Erfindung ergeben sich aus der nachfolgenden Beschreibung eines bevorzugten Ausführungsbeispiels anhand der einzigen Figur; diese zeigt in:

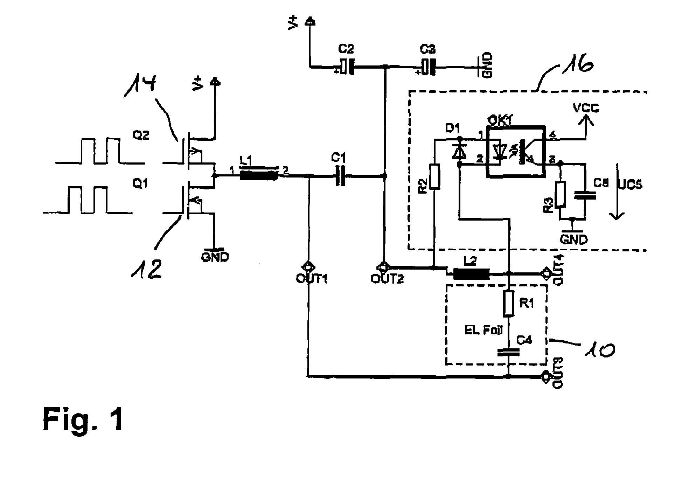

- Fig. 1:: ein schematisches Schaltbild der erfindungsgemäßen Vorrichtung zur Erfassung des Betriebszustands einer Elektrolumineszenz-Leuchteinheit gemäß einer ersten bevorzugten Ausführungsform der Erfindung.

Wie in dem anliegenden Schaltbild gezeigt, ist ein ansonsten bekanntes, flächiges Elektrolumineszenz-Leuchtmodul einer geeigneten flächigen Gestaltung dargestellt durch die gestrichelte Linie 10 und weist gemäß seinem Wechselstrom-Ersatzschaltbild (inhärent) einen Widerstand R1 sowie eine Kapazität C4 auf.

Diese Einheit 10 wird angesteuert durch ein zwischen den Klemmen OUT3 und OUT4 anfallendes Wechselspannungssignal einer typischen Frequenz zwischen 100 Hz und 2000 Hz (innerhalb der nicht gezeigten, vorgeschalteten Pulsweitenmodulationseinheit einstellbar, ebenso wie der Spannungshub im Bereich zwischen 0 und ca. 180 VAC).

Im linken Bereich der Schaltung verdeutlichen die schematisch gezeigten Transistoren 12, 14 mit diesen schematisch zugeordneten komplementären Steuersignalen eine digitale Erzeugung des Steuersignals für das EL-Leuchtmodul, und zwar mittels der erwähnten, nicht näher gezeigten PWM-Signalerzeugungseinheit (PWM = Puls-Weiten-Modulation zur Variation einer Frequenz des Ansteuersignals, ggf. zusätzlich mit Einstellbarkeit des maximalen Spannungshubs).

Das Digitalsignal der Schalttransistoren 12, 14 wird mittels eines ersten nachgeschalteten Tiefpassfilters, bestehend aus Induktivität L1 und Kapazität C1, in eine annähernd sinusförmige Form gebracht; dieses Sinussignal liegt dann zwischen den Knoten OUT1 und OUT2 an.

Nachgeschaltet ist eine zweite Tiefpass-Filtereinheit, bestehend aus einer (diskreten) Induktivität L2 sowie der Kapazität C4 des EL-Moduls 10. Im Rahmen des vorliegenden Ausführungsbeispiels wird nämlich die Signalversorgung für das EL-Modul 10 durch zweifache Tiefpass-Filterung erreicht, mit dem Zweck einer ausreichenden Glättung der Sinusspannung und mithin eines hinreichend einer idealen Sinusform angenäherten Signalverlaufs, da insbesondere unerwünschte Rechteckspannungen bzw. zackige Wellenverläufe sich nachteilig auf die Lebensdauer eines EL-Elements auswirken.

Gemäß Schaltbild liegt also die eigentliche, doppelt geglättete Steuerspannung für das EL-Modul zwischen den Knoten OUT3 und OUT4 an; typischerweise ist in der Praxis diese Anbindung realisiert durch ein Kabel od. dgl. flexibles Leiterelement, so dass das eigentliche EL-Modul 10 entfernt von der umgebenden Signalelektronik angebracht und vorgesehen werden kann.

Zusätzlich weist die gezeigte Schaltung gemäß Fig. 1 erfindungsgemäß eine von der gestrichelten Linie 16 umrandete Spannungs-Detektionseinheit auf, welche, über einen Widerstand R2 und eine Gleichrichterdiode D1, eingangsseitig einen Opto-Koppler OK1 speist, an dessen Ausgang wiederum eine Steuerspannung UC5 zur weiteren, nachfolgenden Auswertung und Überwachung, etwa mittels einer nachgeschalteten Mikroprozessoreinheit (nicht gezeigt), erfolgen kann.

Diese würde es dann insbesondere ermöglichen, dass als Reaktion auf einen erfassten (Ripple-) Spannungsabfall über der Induktivität L2 eine Deaktivierung der Versorgungsspannung erfolgen kann, mithin also keine Gefahr beim Kabelabriss oder Berührung offener Kabelenden mehr erfolgt.

Die vorliegende Erfindung ist nicht auf das gezeigte Ausführungsbeispiel beschränkt; vielmehr können sowohl die Tiefpassvorrichtungen als auch die konkrete Ausgestaltung der Spannungsdetektion 16 geeignet auf andere Weise erfolgen. Auch bietet es sich insbesondere an, die vorliegende Erfindung zu Nachrüstungszwecken mit bereits existierenden PWM-Modulatoren bzw. Signalerzeugern als Grundlage für eine sicherere EL-Ansteuerung nachzurüsten, oder die Treibereinheit für eine Mehrzal von (auch beabstandet voneinander vorgesehenen) EL-Leuchteinheiten einzusetzen.

## Patentansprüche

1. Vorrichtung zur Erfassung des Betriebszustands einer mittels einer Treibereinheit angesteuerten Elektrolumineszenz-Leuchteinheit (10),
wobei die durch ein pulsweitenmoduliertes Steuersignal (Q1, Q2) angesteuerte Treibereinheit eine erste Tiefpasseinheit (L1, C1) sowie eine mittels einer Induktivität (L2) realisierte zweite Tiefpasseinheit (L2, C4) aufweist, die unmittelbar mit mindestens einem flächigen Elektrolumineszenz-Leuchtmodul verbunden ist und/oder eine kapazitive Wirkung (C4) des Elektrolumineszenz-Leuchtmoduls zum Realisieren eines Tiefpasses ausnutzt,
**dadurch gekennzeichnet, dass**
der als Bauelement ausgebildeten Induktivität (L2) eine Spannungs-Detektoreinheit (16) zugeordnet ist, die zum Erfassen einer über der Induktivität abfallenden Spannung und zum Erzeugen eines Lastunterbrechungs-Steuersignals (UC5) als Reaktion auf einen detektierten Spannungsabfall über der Induktivität ausgebildet ist.

2. Vorrichtung nach Anspruch 1, **dadurch gekennzeichnet, dass** die zweite Tiefpasseinheit als Reihenschaltung der Induktivität sowie des flächigen Elektrolumineszenz-Leuchtmoduls realisiert ist.

3. Vorrichtung nach Anspruch 2, **dadurch gekennzeichnet, dass** die zweite Tiefpasseinheit kein zusätzliches kapazitives Bauelement aufweist.

4. Vorrichtung nach einem der Ansprüche 1 bis 3, **gekennzeichnet durch** eine der Spannungs-Detektoreinheit zugeordnete Spannungsunterbrechungseinheit, die zum Abschalten einer Versorgungs- und/oder Steuerspannung für das Elektrolumineszenz-Leuchtmodul als Reaktion auf das Lastunterbrechungssteuersignal ausgebildet ist.

5. Vorrichtung nach einem der Ansprüche 1 bis 4, **dadurch gekennzeichnet, dass** die Spannungs-Detektoreinheit zur Detektion einer gegenüber einer Betriebsfrequenz des Elektrolumineszenz-Leuchtmoduls höherfrequenten, über der Induktivität abfallenden Wechselspannung, insbesondere einer durch das pulsweitenmodulierte Steuersignal bewirkten Ripple-Spannung, ausgebildet ist.

6. Vorrichtung nach einem der Ansprüche 1 bis 5, **dadurch gekennzeichnet, dass** die Spannungs-Detektoreinheit eine Opto-Kopplereinheit (OK1) aufweist.

7. Vorrichtung nach Anspruch 6, **dadurch gekennzeichnet**, **dadurch gekennzeichnet, dass** die Opto-Kopplereinheit ausgangsseitig mit einer Steuer- und/oder Auswerteeinheit, insbesondere einer Mikrocontrollereinheit, verbunden ist.

8. Vorrichtung nach einem der Ansprüche 1 bis 7, **dadurch gekennzeichnet, dass** das Elektrolumineszenz-Leuchtmodul mittels eines Kabels und/oder einer flexiblen Leitung mit der Treibereinheit verbunden ist und die Spannungs-Detektoreinheit als Vorrichtung zum Detektieren eines Kabelabrisses und/oder einer Leitungsunterbrechung des Kabels bzw. der flexiblen Leitung sowie zum nachfolgenden Unterbrechen einer Versorgungsspannung für das Elektrolumineszenz-Leuchtmodul ausgebildet ist.

9. Vorrichtung nach einem der Ansprüche 1 bis 8, **dadurch gekennzeichnet, dass** der Treibereinheit eine Vorrichtung (12, 14) zum Erzeugen eines pulsweitenmodulierten Digitalsignals als Steuersignal vorgeschaltet ist, mit welcher eine Spannung und/oder Frequenz des Steuersignals einstellbar ist.

10. Vorrichtung nach Anspruch 9, **dadurch gekennzeichnet, dass** die Vorrichtung zum Erzeugen des Digitalsignals zum Erzeugen bevorzugt programmierbarer Lichteffekte oder Lichtmuster der mindestens einen Elektrolumineszenz-Leuchteinheit, insbesondere ein bevorzugt veränderbares Blinken, ausgebildet ist.
